# EUROPÄISCHE PATENTSCHRIFT

(11) **EP 3 791 751 B1**
(45) Veröffentlichungstag und Bekanntmachung des Hinweises auf die Patenterteilung: **08.05.2024**
(21) Anmeldenummer: 20193911.3
(22) Anmeldetag: 01.09.2020
(51) Int. Cl.: A46D 3/04, A46B 3/06, B29C 65/08, B29C 65/06, B29C 65/60, B29C 65/00, B29L 31/42, A46D 3/06, B29C 65/56

(54) **VERFAHREN ZUM BEFESTIGEN EINER BORSTE IN EINEM BORSTENTRÄGER SOWIE VORRICHTUNG HIERFÜR**
METHOD FOR FIXING A BRISTLE IN A BRISTLE CARRIER AND DEVICE FOR SAME
PROCÉDÉ DE FIXATION D'UNE BROSSE DANS UN PORTE-BROSSE AINSI QUE DISPOSITIF CORRESPONDANT

(30) Priorität: 10.09.2019 DE 102019124307
(43) Veröffentlichungstag der Anmeldung: 17.03.2021
(73) Patentinhaber: GB Boucherie NV, 8870 Izegem (BE)
(72) Erfinder: BOUCHERIE, Bart Gerard, 8870 Izegem (BE); DEPICKERE, Chris, 8870 Izegem (BE); VANDENBUSSCHE, Henk, 8870 Izegem (BE)
(74) Vertreter: Prinz & Partner mbB

(56) Entgegenhaltungen:
- EP-A1- 2 528 472
- EP-B1- 2 528 472
- DE-A1-102017 122 876

## Beschreibung

Die Erfindung betrifft ein Verfahren zum Befestigen zumindest einer Borste in einer zugeordneten Öffnung in einem Borstenträger aus Kunststoff, der eine Vorderseite hat, wobei die zumindest eine Borste ein verdicktes Befestigungsende besitzt. Der Borstenträger ist nach der Herstellung der Bürste Teil dieser Bürste und nicht ein reines Werkzeug.

Ferner betrifft die Erfindung eine Vorrichtung zum Durchführen des erfindungsgemäßen Verfahrens.

Die Herstellung von Bürsten kann auf verschiedenste Art und Weise erfolgen. Die herkömmliche Methode besteht darin, Borstenbündel zu falten und an der Faltstelle mittels eines Ankers in der Öffnung eines Borstenträgers zu fixieren. Dies ist das sogenannte Verfahren mittels Ankerbefestigung.

Darüber hinaus gibt es verschiedenste Verfahren zum ankerlosen Befestigen. Ein erstes Verfahren besteht darin, dass der Borstenträger um ein verdicktes Befestigungsende des ungefalteten Bündels gespritzt wird, sodass der Borstenträger erst später hergestellt wird, und zwar wird er bei seiner Herstellung gleich mit dem Borstenbündel vereinigt.

Wieder ein anderes Verfahren sieht vor, dass die Borstenenden zur Erzeugung des verdickten Befestigungsendes gemeinsam so erhitzt werden, dass sie schmelzen und zu einem Klumpen oder kugelartigen verdickten Befestigungsende vereinigt werden. Mit diesem verdickten Befestigungsende voraus wird das Borstenbündel dann in eine Öffnung in einem Borstenträger eingestoßen, wobei vor dem Einstoßen die Wand um die Öffnung herum geschmolzen wird. Das verdickte Befestigungsende sticht dann in die Wand ein, um diese plastisch zu verformen.

Eine weitere Lösung, die in den letzten Jahren am Markt für einen Umbruch gesorgt hat, besteht darin, das erstarrte, verdickte Befestigungsende in eine übergroße Öffnung im Borstenträger einzuschieben und danach erst den Umfangsrand um die Öffnung zu erwärmen, und zwar auf eine Temperatur, die unterhalb der Schmelztemperatur liegt. Anschließend wird der erwärmte Umfangsrand mit Druck von außen beaufschlagt, sodass sich die Öffnung am Mündungsrand verengt. Damit wird das verdickte Befestigungsende gegen Herausziehen gesichert. Das Werkzeug, welches den mechanischen Druck auf die Vorderseite des Borstenträgers ausübt, ist vorzugsweise das Magazin, mit welchem das Borstenbündel herantransportiert wird. Das Magazin hat damit eine Mehrfachfunktion und muss beheizbar ausgeführt sein. Insbesondere wird hier eine elektrische Heizung verwendet. Lediglich beispielhaft wird hier die DE 10 017 122 876 A1 genannt.

Die EP 2 528 472 A1 beschreibt die Verwendung einer Sonotrode zum Verschweißen eines Borstentragplättchens mit einem Zahnbürstenkörper. Dazu wird das Material des Borstenträgerplättchens und des Zahnbürstenkörpers in der Schweißzone mit der Sonotrode aufgeschmolzen und ein Stoffschluss zwischen dem Borstenträgerplättchen und dem Zahnbürstenkörper hergestellt.

Aufgabe der Erfindung ist es, das zuletzt erwähnte Verfahren, bei dem das Borstenbündel in eine Öffnung eingesteckt und der Öffnungsrand anschließend erwärmt wird, weiter zu verbessern und auch zu vereinfachen.

Das erfindungsgemäße Verfahren zeichnet sich durch folgende Schritte aus:
Die zumindest eine Borste, vorzugsweise das gesamte Borstenbündel, wird mit ihrem verdickten Befestigungsende voraus von der Vorderseite aus so weit in die Öffnung gesteckt, dass das verdickte Befestigungsende komplett in der Öffnung sitzt und von der Vorderseite beabstandet ist. Das bedeutet, der sich an das verdickte Befestigungsende unmittelbar anschließende, nicht verdickte Teil der Borste oder des Borstenbündels sitzt ebenfalls in der Öffnung.

An die Vorderseite wird eine Sonotrode um einen die Öffnung an der Vorderseite umgebenden Öffnungsrand angelegt. Das bedeutet, die Sonotrode kontaktiert den Borstenträger im Bereich des Öffnungsrandes.

Die Sonotrode wird aktiviert und sorgt durch ihre Schwingungsenergie und Druck auf die Vorderseite des Borstenträgers für eine Erwärmung des Kunststoffs im Borstenträger unterhalb des Öffnungsrands. Die Sonotrode muss somit nicht den gesamten Borstenträger auf eine erhöhte Temperatur bringen, sondern nur den Teil der die Öffnung begrenzenden Wandung, der unterhalb der Vorderseite und des Öffnungsrandes liegt. Die Sonotrode muss nicht erst dann aktiviert werden, wenn sie schon den Öffnungsrand kontaktiert, sondern kann bereits schwingend gegen den Öffnungsrand gefahren werden.

Die aktivierte Sonotrode wird während des Schwingens an der Vorderseite gegen den Öffnungsrand gedrückt und deformiert durch diesen Druckvorgang den lokal erwärmten Borstenträger unterhalb des Öffnungsrands. Damit wird der Querschnitt der Öffnung im Bereich des Öffnungsrands reduziert, nämlich auf einen neuen, kleineren Querschnitt, welcher kleiner ist als das verdickte Befestigungsende, um dieses Befestigungsende im Borstenträger mechanisch zu arretieren. Die Öffnung wird also im Bereich ihrer Mündung, die am Übergang zum vorderseitigen Öffnungsrand liegt, eingeschnürt und das Befestigungsende, welches lose in die Öffnung eingesteckt werden konnte, wird zu einem integrierten Anker.

Das erste Kontaktieren der Vorderseite durch die Sonotrode, das Aktivieren der Sonotrode und das Zustellen in den Borstenträger hinein kann gleichzeitig erfolgen oder zeitlich leichtgestaffelt.

Die Bewegung in den Borstenräger hinein kann ferner optional weg- und/oder kraft- und/oder zeitgesteuert erfolgen.

Es ist folglich nicht mehr nötig, das Magazin mit einer elektrischen Heizung wie im Stand der Technik auszurüsten.

Die Ultraschallschwingung der Sonotrode wird während des Umformvorgangs weiter beibehalten. Sie erwärmt einen minimalen Bereich unterhalb ihrer Stirnseite und verformt diesen, drückt sich also in das Material ein, erwärmt, weil sie weiterhin schwingt, weiteres Material, drückt sich dabei noch tiefer ein, um noch mehr Kunststoff zu verformen usw., bis die gewünschte axiale Verfahrstrecke erreicht ist.

Dank der Ultraschalltechnik, kann der Kunststoff nie wesentlich über seine Schmelztemperatur aufgeheizt werden und dadurch nie thermisch geschädigt werden.

Der thermoplastische Kunststoff ist bei allen Ausführungsformen bevorzugt aus der aus Polyester, insbesondere Polyethylenterephthalat (PET) und Polybutylenterephthalat (PBT), Polypropylen (PP), Polycarbonat (PC), Polyamid (PA), Polyvinylacetat (PVA), Polyethylen (PE), Acrylnitril-Butadien-StyrolCopolymer (ABS) und Styrol-Acrylnitril-Copolymer (SAN) bestehenden Gruppe ausgewählt. Es können sowohl Homopolymere als auch Copolymere mit den genannten thermoplastischen Kunststoffen eingesetzt werden.

Darüber hinaus ist es von Vorteil, wenn die Öffnung vom Querschnitt her so groß ist, dass das verdickte Befestigungsende ohne Widerstand in die Öffnung eingeschoben werden kann, das heißt, ohne dass eine Presspassung zwischen Öffnung und Befestigungsende entsteht.

Als Sonotrode kann eine um die Öffnung komplett oder nur teilweise herumlaufende Sonotrode verwendet werden, sodass mit anderen Worten die Kontaktfläche der Sonotrode entweder ein geschlossener Ring ist oder nur Ringabschnitte bildet.

Verläuft die Sonotrode nur teilweise um die Öffnung herum, kann sie in einer Variante der Erfindung längst geschlitzt sein und sich aus mehreren schalenförmigen Sonotrodenabschnitten zusammensetzen.

Vorzugsweise können diese Sonotrodenabschnitte mehr oder weniger weit zusammengefahren werden, um eine zwischen sich ausgebildete Aufnahme für die wenigstens eine Borste, insbesondere das Borstenbündel, vom Querschnitt her variabel zu gestalten.

Durch diese Sonotrodenabschnitte kann die Sonotrode eine Halteeinheit bilden, um die zumindest eine Borste, vorzugsweise das Borstenbündel zwischen sich aufzunehmen und zu halten.

Es ist somit optional möglich, dass dieselbe Sonotrode für unterschiedliche Querschnitte von Borstenbündeln verwendet wird.

Die zumindest eine Borste, insbesondere das Borstenbündel kann aus thermoplastischem Kunststoff bestehen. Das verdickte Befestigungsende wird durch Schmelzen eines Endes der Borste, bei einem Borstenbündel durch Verschmelzen der Enden der Borsten des Borstenbündels gebildet. Dieses Aufheizen kann vorzugsweise kontaktlos erfolgen, sei es zum Beispiel über eine Strahlungsheizung oder Heißluft.

Das verdickte Befestigungsende eines Borstenbündels, welches in die zugeordnete Öffnung eingesteckt wird und durch die Sonotrode durch Umformen des Kunststoffs verankert wird, kann vor oder nach Einbringen des Borstenbündels in die Sonotrode erzeugt werden. Die Borstenenden werden also entweder vor dem Einbringen in die Sonotrode miteinander verschmolzen oder nachdem sie in die Aufnahme der Sonotrode eingesetzt werden. Dasselbe gilt für eine singuläre Borste, die allein in eine Öffnung eingesteckt wird.

Wie bereits erläutert, kann die Sonotrode eine Aufnahme für die zumindest eine Borste, insbesondere das Borstenbündel haben, und die Sonotrode transportiert diese zum Borstenträger. Die zumindest eine Borste, vorzugsweise das Borstenbündel, wird aus der Aufnahme der Sonotrode in die Öffnung im Borstenträger geschoben.

Während des Transports steht das verdickte Befestigungsende aus der Sonotrode heraus, sodass mit dem Heranfahren der Sonotrode mit dem darin aufgenommenen Borstenbündel oder der einzigen Borste diese mit ihrem Befestigungsende voraus zuerst in die Öffnung gesteckt wird. Die Sonotrode hat damit eine Mehrfachfunktion, nämlich eine Transportfunktion, eine Erwärmungsfunktion und eine Umformfunktion.

Nach dem Einstecken kann noch ein zusätzlicher Schieber eingesetzt werden, der dafür sorgt, dass das Befestigungsende am Grund der Öffnung, die vorzugsweise eine Sacklochöffnung ist, anliegt. Der Schieber kann beispielsweise in die Ausnehmung in der Sonotrode eindringen oder ist in dieser geführt.

Um den Aufwand für das erfindungsgemäße Verfahren zu reduzieren, kann beim Einschieben der zumindest einen Borste in die Öffnung das Borstenende auf Umgebungstemperatur sein, das heißt nicht erwärmt sein und/oder der Borstenträger im Bereich des Öffnungsrandes und der Öffnung ebenfalls nicht erwärmt sein und damit auf Umgebungstemperatur liegen. In diesem Fall wird die Erwärmung ausschließlich durch die Sonotrode erreicht.

Die Sonotrode kann auch mehrere Borstenbündel aufnehmen und gleichzeitig in zugeordneten Öffnungen in demselben Borstenträger durch Erwärmen und Umformen des Kunststoffs verankern. Die Sonotrode kann in diesem Zusammenhang, was nicht einschränkend zu verstehen ist, eine ebene Vorderseite haben, die vollflächig auf der Vorderseite des Borstenträgers aufliegt und diese großflächig erwärmt. Alternativ hierzu hat die gemeinsame Sonotrode nur inselförmige Kontaktflächen mit dem Borstenträger, das heißt Kontaktflächen um den jeweiligen Öffnungsrand herum und damit mehrere inselförmige Kontaktflächen. Nur an diesen Kontaktflächen wird dann erwärmt.Die Sonotrode muss und soll nicht den Kunststoff des Borstenträgers komplett über die gesamte Höhe oder Dicke erwärmen, es reicht völlig aus, dass nur ein oberer, der Vorderseite naher Bereich des die Öffnung begrenzenden Kunststoffs erwärmt und umgeformt wird. Im Bereich des Grundes der Öffnung, also im Bereich des verdickten Befestigungsendes, müssen keine Erwärmung und keine Umformung vorgenommen werden. Dies ist aber nicht einschränkend zu verstehen.

Der Kunststoff kann so umgeformt und die Öffnung so verengt werden, dass der umgeformte Kunststoff am Außenumfang des Borstenbündels oder der zumindest einen Borste dicht/dichtend anliegt, und zwar bevorzugt gleich im Bereich der Mündung (Übergang Öffnung zu Vorderseite) der Öffnung. Das ist nicht nur wichtig, um sicherzustellen, dass das verdickte Borstenbündelende bei Verwendung der Bürste und deshalb mechanischer Beanspruchung der Bürste nicht mehr aus der Öffnung rutscht, sondern auch, dass kein Wasser oder "Unsauberkeiten" in die Öffnungen hineindringen können. Letzteres ist vor allem wichtig bei sogenannten "Hygienebürsten", die in z.B. Metzgereien, der Nahrungsmittelindustrie, der Pharmaindustrie, usw. verwendet werden, wo vermieden werden soll, dass sich Bakterien und pilzartige Organismen in den Öffnungen einnisten. Die Verengung der Öffnungen am Außenumfang gestaltet so eine Art Dichtung um das Borstenbündel, die an der zumindest einen Borste am Borstenbündel beabstandet vom verdickten Borstenende anliegt. Es geht in diesem Fall darum, einen Kontakt des Kunststoffs mit der zumindest einen Borste zu schaffen, der im Bereich der Mündung (Übergang Öffnung zu Vorderseite) der Öffnung vorliegt, damit möglichst keine oder wenig Flüssigkeit in die Öffnung eindringen kann. Wird nicht eine einzelne Borste in die Öffnung eingesetzt, sondern ein Borstenbündel, kann gemäß dieser Ausführungsform der Kunststoff am Außenumfang des Borstenbündels anliegen.

Die oben genannte Aufgabe wird auch durch eine Vorrichtung zum Durchführen des erfindungsgemäßen Verfahrens gelöst, mit einer Halterung für die Aufnahme von Borstenträgern mit zumindest einer Öffnung im Borstenträger, einem Zuführwerkzeug für die zumindest eine Borste, insbesondere das Borstenbündel, die in die Öffnung eingesteckt wird, sowie einer die zumindest eine Borste aufnehmende Sonotrode, welche in Richtung zur Vorderseite des Borstenträgers hin und von der Vorderseite weg beweglich geführt ist, wobei die Sonotrode so ausgebildet ist, dass sie den Kunststoff unterhalb des Öffnungsrandes erwärmen kann.

Die Sonotrode kann auch Teil des Zuführwerkzeugs bilden und zumindest eine Aufnahme für die zumindest eine Borste, das bedeutet automatisch bei Vorhandensein eines Borstenbündels für das Borstenbündel, haben, wobei zumindest ein Schieber vorgesehen ist, der die zumindest eine Borste/das Borstenbündel aus einer zugeordneten Ausnehmung nach Herantransportieren an den Borstenträger in die zugeordnete Öffnung schiebt. Sind mehrere Ausnehmungen für beabstandete Borsten oder Borstenbündel vorgesehen, haben die Ausnehmungen das Lochmuster, welches auch in dem Borstenträger vorgesehen ist. Damit können, optional, über entsprechende Schieber gleichzeitig oder allenfalls leicht zeitversetzt die Borsten/Borstenbündel in ihre Öffnungen geschoben werden.

Die Ausnehmung ist im Querschnitt an die Form der zugeordneten Öffnung angepasst, hat aber vorzugsweise einen kleineren Querschnitt als die Öffnung im nicht deformierten Zustand dieser Öffnung. Damit ist sichergestellt, dass die Sonotrode stirnseitig auf jeden Fall am Öffnungsrand anliegt und nicht radial seitlich versetzt erst den Öffnungsrand kontaktiert. Damit würde nämlich ein weniger erwärmter Öffnungsrand im Bereich der Mündung entstehen. In diesem Bereich ist es jedoch vorteilhaft, wenn ausreichend Wärme vorhanden ist, um das Material nach innen zu drücken. Auch führt eine Sonotrode, die gleichzeitig als Presswerkzeug dient und sich über die Öffnung erstreckt und nicht am Öffnungsrand endet, dazu, dass das nach innen verformte Kunststoffmaterial noch eine Formbegrenzung durch die Stirnseite der Sonotrode erhält. Damit wird die Oberfläche des Borstenträgers im Bereich des Öffnungsrandes nach dem Umformen sehr glatt.

Abhängig von der Anwendung (Kunststoff, Form, ...) kann die Sonotrode schon im Ultraschallbereich schwingen, bevor Sie die Aussenseite des Bürstenkörpers berührt, um dann schon sofort beim ersten Kontakt und beim Anfang des Druckaufbaus Schwingungsenergie übertragen zu können. Meistens aber wird die Sonotrode zuerst gegen den Bürstenkörper gebracht und erst nach Erreichen eines gewissen Minimumdrucks zum Schwingen angeschaltet.

Dauer, Druck, Zustellung, Leistung, Anfang und Ende der Schwingungsenergie-Übertragung sind mit modernen Ultraschallgeräte beliebig einstellbar, sowohl individuell als auch abhängig voneinander in beliebig programmierbaren Zyklen. Auch pulsierende Zyklen sind denkbar. Meistens wird empirisch ermittelt, welche Parameter in welcher Kombination für welche Anwendung das beste Ergebnis ergeben.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Perspektivansicht eines Borstenträgers, der mit Borstenbündeln bestopft wird,
- Figur 2 den Borstenträger nach Figur 1, nachdem einige Borstenbündel darin verankert sind,
- Figur 3 eine Querschnittsansicht durch den Borstenträger und eine Sonotrode, die beim erfindungsgemäßen Verfahren und der erfindungsgemäßen Vorrichtung eingesetzt wird, kurz nach dem Einschieben eines Borstenbündels in eine Öffnung im Borstenträger,
- Figur 4 eine Querschnittsansicht nach Figur 3 während des Zusammenpressens des Kunststoffs,
- Figur 5 eine Querschnittsansicht durch einen Bereich des Borstenträgers nach Einsetzen und Befestigen des Borstenbündels,
- Figur 6 eine zweite Ausführungsform der erfindungsgemäßen Vorrichtung in schematischer Darstellung,
- Figur 7 eine Querschnittsansicht einer weiteren, bei der Erfindung eingesetzten Sonotrode, und
- Figur 8 mehrere Querschnittsansichten der möglichen Konturen der Öffnung sowie der Ausnehmung in der Sonotrode.

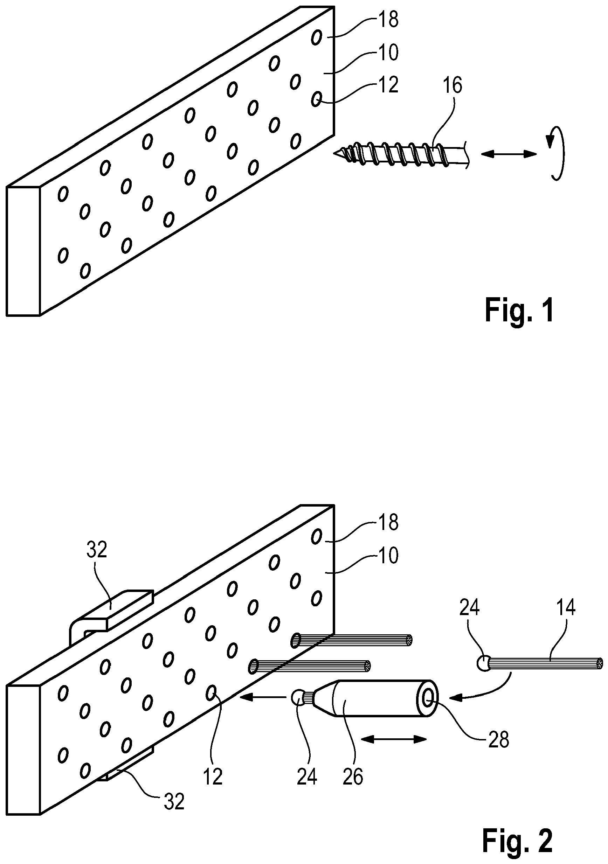

In Figur 1 ist ein Borstenträger 10 dargestellt, der Teil einer fertigen Bürste ist. Der Borstenträger 10 besteht aus einem thermoplastischen Kunststoff und hat zahlreiche Öffnungen 12, in die eine Borste oder mehrere Borsten, das heißt auch ein Borstenbündel 14 (siehe Figur 2), gesteckt und im Borstenträger 10 verankert werden kann.

Die spätere Bürste kann jede Art von Bürste sein, sei es eine Haushaltsbürste, eine Zahnbürste oder dergleichen. Der Borstenträger 10 kann zum Beispiel auch der gesamte Bürstenträger sein oder ein Teil des Bürstenträgers, zum Beispiel ein dann später mit Borstenbündeln bestücktes Plättchen, das mit dem Rest des Borstenkörpers vereinigt wird, zum Beispiel durch Umspritzen, Anschweißen, Ankleben oder dergleichen.

Die Öffnungen 12 im Borstenträger 10 werden entweder durch Bohren hergestellt, wie symbolisch über das dargestellte Bohrwerkzeug 16 symbolisiert, oder beim Spritzgießen des Borstenträgers 10.

Die Öffnungen 12 sind insbesondere Sacklöcher.

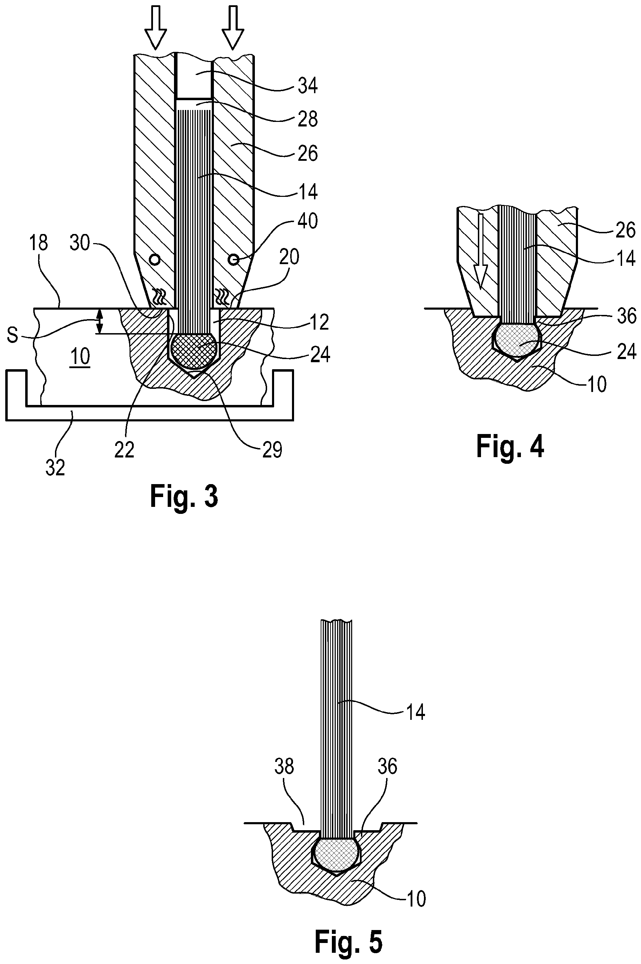

Eine weitere Besonderheit besteht darin, dass die Öffnungen 12 bis auf den Boden zylindrisch ausgeführt sind, das heißt, keine Hinterschneidungen oder dergleichen haben, siehe Figur 3.

Die Öffnung beginnt von einer Vorderseite 18 des Borstenträgers 10 aus, und die Mündung der Öffnung, also der Übergang der Öffnung 12 zur Vorderseite 18, wird von einem Öffnungsrand 20 umgeben, der ringförmig um die Öffnung 12 auf der Vorderseite 18 umläuft.

Die Öffnung 12 selbst wird durch eine Innenseite 22 der die Öffnung 12 begrenzenden Wand definiert.

In der dargestellten Ausführungsform gemäß Figur 3 verläuft die Öffnung 12 rechtwinklig zur Vorderseite 18, sie kann aber auch schräg hierzu verlaufen.

In die jeweilige Öffnung 12 wird zumindest eine Borste oder ein Borstenbündel 14 eingesteckt und darin befestigt, wobei die zumindest eine Borste oder das Borstenbündel ein verdicktes Befestigungsende 24 besitzt.

Dieses verdickte Befestigungsende 24 wird dadurch erzeugt, dass die singuläre Borste oder die Borsten des Borstenbündels gemeinsam erhitzt werden und schmelzen, sodass sich ein Pfropfen oder eine Art Kugel aus Kunststoffmaterial bildet, die vom Querschnitt her dicker als die singuläre Borste oder, wenn ein Borstenbündel 14 in den Borstenträger 10 eingesetzt wird, dicker als der Querschnitt des Borstenbündels 14 ist. Im Falle eines Borstenbündels 14 ist das verdickte Befestigungsende das gemeinsame Befestigungsende aller Borsten des Borstenbündels 14, weil der geschmolzene Kunststoff der Borstenenden ineinander übergeht, sodass die Borsten eines Borstenbündels 14 miteinander verbunden sind.

Die singuläre Borste oder das Borstenbündel 14 wird durch eine Sonotrode 26 (siehe Figur 2) im Borstenträger 10 verankert, und zwar ankerlos. Dies wird im Folgenden anhand der Figuren 2 bis 5 und einer Ausführungsform beschrieben.

Die Sonotrode 26 hat eine Aufnahme 28 in Form eines zentralen Kanals.

Beispielsweise wird ein Borstenbündel 14 mit verdicktem Befestigungsende 24 von vorne (dies ist nicht einschränkend zu verstehen) in die Aufnahme 28 eingeschoben, sodass, wie in Figur 2 gezeigt, das Befestigungsende 24 vorderseitig aus der Sonotrode 26 herausragt.

Anschließend wird die Sonotrode 26, die auf einem verschiebbaren und beweglichen Werkzeughalter sitzt, zur zugeordneten Öffnung 12 bewegt, in welche das Borstenbündel 14 eingesetzt werden soll.

Wie in Figur 3 gezeigt, wird die Sonotrode 26 vorzugsweise auf die Vorderseite 18 aufgesetzt, sodass das über die Sonotrode 26 vorstehende Befestigungsende 24 in die Öffnung 12 eingeschoben wird.

Dabei wird vorzugsweise, auch das ist nicht einschränkend zu verstehen, das Befestigungsende 24 am Boden 29 der Öffnung 12 anliegen.

Der Querschnitt der Öffnung 12 ist dabei auf den Querschnitt (senkrecht zur Längserstreckung der Borste oder des Borstenbündels 14 bezogen) abgestimmt, dass er mindestens genauso groß ist, vorzugsweise etwas größer als der Querschnitt des verdickten Befestigungsendes 24. Damit kann das Befestigungsende 24 ohne Klemmen oder Reibung in die Öffnung 12 eingesteckt werden.

Alternativ hierzu kann eine minimale Presspassung zwischen der Innenseite 22 und dem verdickten Befestigungsende 24 vorhanden sein.

Wie in Figur 3 zu erkennen ist, steht das verdickte Befestigungsende 24 nicht gegenüber der Vorderseite 18 nach außen vor, sondern ganz im Gegenteil, es liegt unterhalb der Vorderseite 18 mit einem gewissen Abstand s von der Vorderseite 18. Das bedeutet, über die Strecke s verlaufen dann die Borsten des Borstenbündels 14 in der Öffnung 12.

Die Sonotrode 26 hat eine Stirnseite 30, mit der sie vorzugsweise vollflächig auf der Vorderseite 18 aufliegt.

Beispielsweise kann die Stirnseite 30 eben sein.

Wie in Figur 3 zu sehen ist, ist der Querschnitt der Aufnahme 28 kleiner als der Querschnitt der Öffnung 12, sodass die Stirnseite 30 die Öffnung 12 zur Vorderseite 18 teilweise abdeckt.

Der Querschnitt der Aufnahme 28 kann minimal größer als der Querschnitt des Borstenbündels 14 sein oder auch minimal kleiner, wobei in diesem Fall entweder das Borstenbündel 14 über eine trichterförmige Einführhilfe in die Aufnahme 28 eingeführt wird oder die Aufnahme 28 hat im Bereich der Stirnseite 30 eine trichterförmige Aufweitung zur Erleichterung beim Einschieben des Borstenbündels 14.

Eine weitere Variante sieht vor, dass die Sonotrode 26 ähnlich zu einem Klemmbacken eines Bohrfutters längs geschlitzt ist und aus mehreren schalenförmigen Abschnitten besteht, wobei sich die Innenseiten der Schalen dann zur Aufnahme 28 ergänzen. Diese Einzelbacken, die dadurch entstehen, lassen sich dann seitlich voneinander wegbewegen, sodass die Aufnahme 28 vergrößert wird und das Borstenbündel 14 oder die einzelne Borste leichter in die Aufnahme 28 eingeschoben werden kann oder auch von der Rückseite aus in die Aufnahme 28 hineintransportiert werden kann.

Der Borstenträger 10 sitzt während dieses Verfahrens fest gehaltert in einer Halterung 32 der entsprechenden Vorrichtung

Das Einschieben der Borste oder des Borstenbündels 14 in die Öffnung 12 kann unterstützt werden durch einen Schieber 34, siehe Figur 3, der in die Aufnahme 28 eindringen kann und das Borstenbündel 14 bis zum Boden 29 der Öffnung 12 drückt.

Nachdem das Borstenbündel 14 korrekt in der Öffnung 12 positioniert ist, wird die Sonotrode 26 gegen die Vorderseite 18 gedrückt und es beginnt die Schwingungsenergieübertragung auf den Borstenträger.

Durch das Schwingen der Sonotrode 26 wird in der Kontaktfläche zwischen der Sonotrode und dem Kunststoff des Borstenträgers 10 unterhalb der Stirnseite 30 und damit im Bereich unterhalb des Öffnungsrandes 20 Wärme erzeugt.

Die Sonotrode 26 wird jetzt weiter in Richtung der Längserstreckung der Borsten des Borstenbündels 14 gegen die Vorderseite 18 gedrückt, sodass das erwärmte Kunststoffmaterial unterhalb des Öffnungsrandes plastisch nach innen verformt wird (siehe Figur 4) und sich die Öffnung 12 oberhalb des verdickten Befestigungsendes 24 einschnürt und einen Querschnitt erhält, der deutlich kleiner als der des verdickten Befestigungsendes 24 ist.

Die Einschnürung 36 dient dazu, das Borstenbündel 14 formschlüssig in der Öffnung 12 zu haltern. Dieser Erwärmungs- und Umformprozess erfolgt ähnlich wie bei einem heißen Messer, das sich in eine Butter drückt, sozusagen fließend, denn die Sonotrode erwärmt unter sich nur etwas Kunststoff, kann sich wegen der geringer werdenden Stabilität in diesen etwas eindrücken, erwärmt tiefer liegendes Kunststoffmaterial, formt dieses um, usw., um schließlich in der gewünschten Tiefe die Bewegung zu stoppen.

Es ist möglich, aber nicht notwendig und würde zu einer höheren Taktzeit führen, wenn auch das Material des Borstenträgers 10 seitlich des verdickten Befestigungsendes 24 stark oder überhaupt erwärmt wird.

Die plastische Verformung des Kunststoffs im Bereich der Einschnürung 36 kann so weit gehen, dass die Einschnürung 36 das Borstenbündel 14 oberhalb des Befestigungsendes 24 umfangsmäßig kontaktiert.

Nach einer gewissen Einwirkzeit, in der die unterste Position der Sonotrode 26 relativ zum Borstenträger 10 unverändert bleibt und die Sonotrode vorzugsweise nicht mehr schwingt, wird die Sonotrode 26 entgegen der Pfeilrichtung in Figur 4 wieder axial abgezogen. Anschließend ist das Borstenbündel 14 entsprechend Figur 5 in den Borstenträger 10 fest eingebettet.

Durch das Aufbringen eines Drucks auf die erwärmte Vorderseite 18 des Borstenträgers 10 kann eine Vertiefung 38 entstehen. Alternativ hierzu kann der Borstenträger 10 vorab im Bereich des Öffnungsrandes 20 eine Erhöhung haben, die dann teilweise oder komplett durch das Umformen verschwindet.

Wenn die Sonotrode 26 eine Öffnung hat, die die Ausnehmung 28 bildet, umschließt sie die Öffnung 12 komplett, ist die Sonotrode 26 längs geschlitzt und besteht aus einzelnen Backen, läuft sie teilweise um die Öffnung 12 an der Vorderseite 18 herum.

Im Falle der backenförmigen Sonotrodenabschnitte, die durch eine geschlitzte Sonotrode entstehen, kann diese, wie gesagt, auch eine Klemmeinheit bilden.

Um die Taktzeit zu erhöhen, ist es auch möglich, in der Sonotrode 26 eine Kühleinrichtung, zum Beispiel mit Kühlkanälen 40, vorzusehen, die dann die Sonotrode 26 und den plastisch deformierten Kunststoff des Borstenträgers 10 abkühlt, nachdem die plastische Verformung stattgefunden hat. Dies ist jedoch nur optional.

Zusätzlich oder alternativ hierzu kann auch die Halterung 32 mit einer Kühlvorrichtung versehen sein, um sicherzugehen, dass der Kunststoff nur im Bereich des Öffnungsrandes, also nur geringfügig unterhalb der Vorderseite 18 erwärmt wird.

Gemäß einer Variante der Erfindung wird der Kunststoff der Öffnung 12 ausschließlich durch die Sonotrode 26 erwärmt, das heißt, wenn das verdickte Befestigungsende 24 in die Öffnung 12 eingeschoben wird, ist der Borstenträger 10 in diesem Bereich nicht erwärmt, sondern weist Umgebungstemperatur auf.

Auch ist gemäß einer Variante der Erfindung das verdickte Befestigungsende 24 beim Einschieben in die Öffnung 12 komplett erstarrt und nicht aufgeheizt.

Alternativ hierzu kann das verdickte Befestigungsende 24 aber noch eine gewisse, gegenüber der Umgebung erhöhte Temperatur besitzen, sodass es sich beim Einschieben in die Öffnung 12 an die Form des Bodens 29 und die Innenseite 22 der Öffnung 12 anpasst.

Bei der Variante nach Figur 2 ist die Vorrichtung so ausgebildet, dass das Befestigungsende 24 gebildet wird, bevor das Borstenbündel 14 in die Sonotrode 26 eingesetzt wird.

Alternativ hierzu kann das Borstenbündel oder, wenn nur mit einer einzelnen Borste bestückt wird, diese zuerst in die Aufnahme 28 gesetzt werden, anschließend wird das aus der Sonotrode 26 vorstehende Befestigungsende 24 erwärmt, zum Beispiel durch Heißluft oder Strahlungswärme, sodass sich das pfropfenförmige oder kugelförmige Befestigungsende 24 bildet.

Optional wird zum Beispiel über Kühlluft dann das Befestigungsende 24 ausgehärtet und auf Umgebungstemperatur gebracht, bevor es in die zugeordnete Öffnung 12 geschoben wird. Das Kühlen generell ist jedoch nur eine Option.

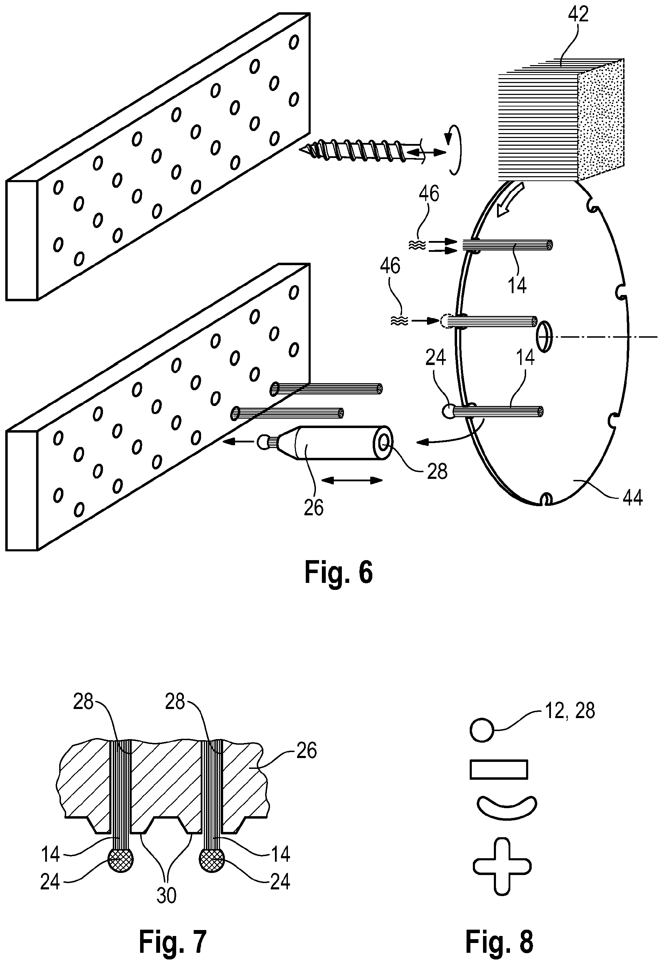

Die Variante nach Figur 6 zeigt eine andere Option der vorliegenden Erfindung, hier wird aus einem Borstenmagazin 42 über eine sich drehende Vereinzelungsvorrichtung 44 immer ein Borstenbündel 14 abgenommen. Es wird dann durch eine symbolisch dargestellte Aufheizvorrichtung 46 das Befestigungsende unter Bildung der Verdickung geschmolzen.

Anschließend wird das Borstenbündel 14 der Vereinzelungsvorrichtung 44 entnommen und in die Sonotrode 26 transportiert. Alternativ hierzu nimmt die Sonotrode 26 das Borstenbündel 14 aus der Vereinzelungsvorrichtung 44.

Zu betonen ist auch, dass in den gezeigten Ausführungsformen die Öffnungen 12 nacheinander bestückt werden, und zwar mittels einer Sonotrode 26 nacheinander.

In diesem Fall führt z.B. die Halterung 32 mit dem Bürstenkörper nach jedem Bündelbefestigungszyklus eine Positionierbewegung aus, um das nächste Loch gegenüber der Sonotrode 26 zu positionieren (eine sogenannte Loch-zu-Lochbewegung), um dann einen nächsten Befestigungszyklus starten zu können. Alternativ kann sich die Sonotrode 26 gegenüber einen stationär gehaltenen Bürstenkörperhalterung 32 positionieren oder es führen sowohl Halterung 32 als auch Sonotrode 26 je ein Teil der notwendigen Positionierung aus.

Vorrichtungen und Mechanismen, um solche Loch-zu-Lochbewegungen zu bewirken zu können, sind ähnlich oder identisch ausgeführt zu denen in allgemein bekannten Bürstenbohr- und -stopfmaschinen.

Natürlich können auch parallel mehrere Sonotroden 26 arbeiten.

Figur 7 zeigt eine weitere Ausführungsform der Erfindung, bei der eine Sonotrode 26 mehr als eine Aufnahme 28 für eine Borste oder ein Borstenbündel 14 hat.

Die Sonotrode 26 kann hier zwei, drei, vier, fünf, sechs oder noch mehr einzelne Borsten oder Borstenbündel 14 oder alle Borsten oder Borstenbündel einer Bürste aufnehmen und gleichzeitig in zugeordnete Öffnungen 12 hineintransportieren und anschließend dort verankern.

Die ganze Stirnseite 30 kann dabei entweder absatzlos ausgeführt sein und eben oder mit einer geringen, gewünschten Krümmung ausgeführt sein, die dann die spätere Form der Vorderseite 18 der Bürste hat.

Alternativ hierzu ist in Figur 7 gezeigt, dass um jede Aufnahme 28 herum die Stirnseite 30 etwas gegenüber dem Rest der Unterseite der Sonotrode 26 vorsteht, sodass sich zum Beispiel eine Art Ringkonus ergibt, wobei die Form dieses Vorsprungs nicht zwingend auf einen Ringkonus eingeschränkt ist. Somit wird nur in diesem Bereich, nämlich im Bereich des jeweiligen Öffnungsrandes 20 der Kunststoff um die Öffnungen 12 erwärmt und anschließend plastisch deformiert. Damit wird die Kraft, mit der die Sonotrode 26 auf den Borstenträger 10 drückt, insgesamt reduziert.

Figur 8 zeigt, dass die Öffnungen 12 unterschiedliche Formen, sogar beliebige Formen aufweisen können. Die Aufnahmen 28 haben komplementäre Formen hierzu, beispielsweise sind die Aufnahmen 28 kreisrund, wenn die Öffnung 12 kreisrund ist, sie haben nur einen geringfügig geringeren Querschnitt, wie zuvor erläutert. Dasselbe gilt auch für die anderen, beliebigen Formen. Das bedeutet, die Geometrie der Aufnahmen 28 ist vorzugsweise der Geometrie der Öffnungen 12, bezogen auf die Querschnitte, entsprechend angepasst.

Im Fall einer Sonotrode gemäß Figur 7 kann natürlich eine Sonotrode 26 Aufnahmen 28 verschiedener Geometrien und auch Größen besitzen.

Zu betonen ist darüber hinaus, dass für sämtliche Ausführungsformen auch ein Zuführwerkzeug vorgesehen werden kann, mit dem zuerst die singuläre Borste oder die mehreren singulären Borsten oder das Borstenbündel 14 oder die mehreren Borstenbündel 14 zum Borstenträger 10 herantransportiert und in die zugeordneten Öffnungen 12 hineinbewegt werden. Erst dann werden eine oder mehrere Sonotroden 26 heranbewegt, die dann die Erwärmung des Kunststoffs hervorrufen und zum plastischen Umformen des Borstenträgers im Bereich des oder der Öffnungsränder 20 sorgen.

Auch kann es vorgesehen sein, dass die Aufnahme 28 etwas größer ist als das zugeordnete Borstenbündel oder die singulär zu verbauende Borste, und zwar so, dass die Sonotrode bei ihrer Schwingung die einzelnen Borsten oder die einzelne Borste nicht mitbewegt. In diesem Fall werden die Borsten durch eine separate Haltevorrichtung positioniert. Dies muss jedoch nicht zwingend der Fall sein, denn es kann auch wie zuvor beschrieben eine gewisse minimale Bewegung der Borsten durch die Sonotrode beim Schwingen stattfinden, diese ist aber so minimal, dass damit keine Fehlpositionierung der Borste oder des Borstenbündels nach dem Umformen des Kunststoffs einhergeht.

## Patentansprüche

1. Verfahren zum Befestigen zumindest einer Borste in einer zugeordneten Öffnung (12) in einem Borstenträger (10) aus Kunststoff, als Teil einer späteren Bürste, der eine Vorderseite (18) hat, wobei die zumindest eine Borste ein verdicktes Befestigungsende (24) besitzt, **gekennzeichnet durch** folgende Schritte:
die zumindest eine Borste wird mit ihrem verdickten Befestigungsende (24) voraus von der Vorderseite (18) aus so weit in die Öffnung (12) gesteckt, dass das verdickte Befestigungsende (24) komplett in der Öffnung (12) sitzt und von der Vorderseite (18) beabstandet ist,
an die Vorderseite (18) wird eine Sonotrode (26) um einen die Öffnung (12) an der Vorderseite (18) umgebenden Öffnungsrand (20) angelegt,
die Sonotrode (26) wird aktiviert und sorgt durch ihre Schwingungsenergie und den Kontakt mit dem Borstenträger (10) für eine Erwärmung des Kunststoffs im Borstenträger (10) unterhalb des Öffnungsrands (20), und
die Sonotrode wird auf der Vorderseite (18) gegen den Öffnungsrand (20) gedrückt und deformiert den erwärmten Borstenträger (10) unterhalb des Öffnungsrands (20) und reduziert den Querschnitt der Öffnung (12) im Bereich des Öffnungsrands (20) auf einen Querschnitt, welcher kleiner ist als das verdickte Befestigungsende (24), um das Befestigungsende (24) im Borstenträger (10) mechanisch zu arretieren.

2. Verfahren nach Anspruch 1, **dadurch gekennzeichnet, dass** eine um die Öffnung (12) komplett oder teilweise herumlaufende Sonotrode (26) verwendet wird.

3. Verfahren nach Anspruch 2, **dadurch gekennzeichnet, dass** die Sonotrode (26) längst geschlitzt ist und sich aus mehreren schalenförmigen Sonotrodenabschnitten zusammensetzt.

4. Verfahren nach Anspruch 3, **dadurch gekennzeichnet, dass** die Sonotrodenabschnitte gemeinsam eine Halteeinheit bilden, um die zumindest eine Borste zwischen sich aufzunehmen und zu halten.

5. Verfahren nach einem der vorhergehenden Ansprüche, **dadurch gekennzeichnet, dass** die zumindest eine Borste aus Kunststoff besteht und das verdickte Befestigungsende (24) durch Schmelzen eines Endes der Borste gebildet wird.

6. Verfahren nach Anspruch 5, **dadurch gekennzeichnet, dass** das Borstenbündel (14) ein gemeinsames verdicktes Befestigungsende (24) hat, welches durch Schmelzen der angrenzenden Borstenenden des Borstenbündels (14) vor oder nach Einbringen in die Sonotrode (26) gebildet wird.

7. Verfahren nach einem der vorhergehenden Ansprüche, **dadurch gekennzeichnet, dass** die Sonotrode (26) und der Borstenträger (10) pro Befestigungszyklus relativ zu einander eine Positionierbewegung ausführen.

8. Verfahren nach einem der vorhergehenden Ansprüche, **dadurch gekennzeichnet, dass** die Sonotrode (26) eine Aufnahme für die zumindest eine Borste hat und die zumindest eine Borste zum Borstenträger (10) transportiert und aus der Aufnahme in die Öffnung (12) im Borstenträger (10) geschoben wird.

9. Verfahren nach einem der vorhergehenden Ansprüche, **dadurch gekennzeichnet, dass** beim Einschieben der zumindest einen Borste in die Öffnung (12) das Befestigungsende (24) und/oder der Borstenträger (10) im Bereich des Öffnungsrandes (20) und der Öffnung (12) nicht erwärmt sind/ist.

10. Verfahren nach einem der vorhergehenden Ansprüche, **dadurch gekennzeichnet, dass** die Sonotrode (26) mehrere Borstenbündel (14) aufnimmt und gleichzeitig in zugeordneten Öffnungen (12) in demselben Borstenträger (10) durch Erwärmen und Umformen des Kunststoffs verankert.

11. Verfahren nach einem der vorhergehenden Ansprüche, **dadurch gekennzeichnet, dass** nur ein oberer, der Vorderseite (18) naher Bereich des die Öffnung (12) begrenzenden Kunststoffs umgeformt wird.

12. Verfahren nach einem der vorhergehenden Ansprüche, **dadurch gekennzeichnet, dass** der Kunststoff so umgeformt und die Öffnung (12) so verengt wird, dass der umgeformte Kunststoff an der zumindest einen anliegt, insbesondere am Außenumfang eines Borstenbündels (14) vorzugsweise dichtend anliegt.

13. Vorrichtung zum Durchführen des Verfahrens nach einem der vorhergehenden Ansprüche, mit einer Halterung (32) für die Aufnahme von Borstenträgern (10) mit zumindest einer Öffnung (12), einem Zuführwerkzeug für die zumindest eine Borste, die in die Öffnung (12) eingesteckt wird, sowie einer die zumindest eine Borste aufnehmenden Sonotrode (26), welche in Richtung zur Vorderseite (18) hin und von ihr weg beweglich geführt ist, wobei die Sonotrode (26) so ausgebildet ist, dass sie den Kunststoff unterhalb des Öffnungsrandes erwärmen und plastisch umformen kann.

14. Vorrichtung nach Anspruch 13, **dadurch gekennzeichnet, dass** die Sonotrode (26) auch Teil des Zuführwerkzeugs bildet und zumindest eine Aufnahme (28) für zumindest eine Borste hat, wobei zumindest ein Schieber (34) vorgesehen ist, der die zumindest eine Borste aus einer zugeordneten Aufnahme (28) nach Herantransportieren an den Borstenträger (10) in die Öffnung (12) schiebt.

15. Vorrichtung nach Anspruch 13 oder 14, **dadurch gekennzeichnet, dass** die Aufnahme (28) im Querschnitt an die Form der zugeordneten Öffnung (12) angepasst ist und einen kleineren Querschnitt als die Öffnung (12) im nicht deformierten Zustand hat.

## Claims

1. A method of fastening at least one bristle in an associated opening (12) in a bristle carrier (10) made from plastic material, as part of a later brush, the bristle carrier having a front side (18), the at least one bristle having a thickened fastening end (24), **characterized by** the following steps:
inserting the at least one bristle, with its thickened fastening end (24) first, into the opening (12) from the front side (18) so far that the thickened fastening end (24) is entirely seated in the opening (12) and is spaced apart from the front side (18),
applying a sonotrode (26) to the front side (18) around an opening edge (20) surrounding the opening (12) on the front side (18),
activating the sonotrode (26) which, owing to its vibrational energy and the contact with the bristle carrier (10), provides for a heating of the plastic material in the bristle carrier (10) below the opening edge (20), and
pressing the sonotrode against the opening edge (20) on the front side (18), the sonotrode deforming the heated bristle carrier (10) below the opening edge (20) and reducing the cross-section of the opening (12) in the area of the opening edge (20) to a cross-section which is smaller than the thickened fastening end (24) in order to mechanically lock the fastening end (24) in place in the bristle carrier (10).

2. The method according to claim 1, **characterized in that** a sonotrode (26) is used that completely or partly surrounds the opening (12).

3. The method according to claim 2, **characterized in that** the sonotrode (26) is slit longitudinally and is composed of a plurality of dish-shaped sonotrode sections.

4. The method according to claim 3, **characterized in that** the sonotrode sections jointly form a holding unit to receive and hold the at least one bristle between them.

5. The method according to any of the preceding claims, **characterized in that** the at least one bristle is made from a plastic material and the thickened fastening end (24) is formed by melting one end of the bristle.

6. The method according to claim 5, **characterized in that** the bristle bundle (14) has a common thickened fastening end (24), which is formed by melting the adjacent bristle ends of the bristle bundle (14) before or after introduction into the sonotrode (26).

7. The method according to any of the preceding claims, **characterized in that** the sonotrode (26) and the bristle carrier (10) perform a positioning movement relative to each other per fastening cycle.

8. The method according to any of the preceding claims, **characterized in that** the sonotrode (26) has a retainer for the at least one bristle and the at least one bristle is transported to the bristle carrier (10) and pushed from the retainer into the opening (12) in the bristle carrier (10).

9. The method according to any of the preceding claims, **characterized in that** during insertion of the at least one bristle into the opening (12), the fastening end (24) and/or the bristle carrier (10) are/is not heated in the area of the opening edge (20) and the opening (12).

10. The method according to any of the preceding claims, **characterized in that** the sonotrode (26) receives a plurality of bristle bundles (14) and anchors them simultaneously in associated openings (12) in the same bristle carrier (10) by heating and reshaping the plastic material.

11. The method according to any of the preceding claims, **characterized in that** only an upper area, close to the front side (18), of the plastic material bordering the opening (12) is reshaped.

12. The method according to any of the preceding claims, **characterized in that** the plastic material is reshaped and the opening (12) is narrowed such that the reshaped plastic material contacts the at least one, in particular preferably is in sealing contact with the outer circumference of a bristle bundle (14).

13. A device for carrying out the method according to any of the preceding claims, comprising a holder (32) for receiving bristle carriers (10) having at least one opening (12), a feed tool for the at least one bristle which is inserted into the opening (12), and a sonotrode (26) which receives the at least one bristle and is guided for movement towards and away from the front side (18), the sonotrode (26) being configured such that it can heat and plastically reshape the plastic material below the opening edge.

14. The device according to claim 13, **characterized in that** the sonotrode (26) also forms part of the feed tool and has at least one retainer (28) for at least one bristle, wherein at least one slide (34) is provided which pushes the at least one bristle from an associated retainer (28) into the opening (12) after it has been transported to the bristle carrier (10).

15. The device according to claim 13 or 14, **characterized in that** the retainer (28) is adapted in cross-section to the shape of the associated opening (12) and has a smaller cross-section than the opening (12) in the non-deformed state.

## Revendications

1. Procédé de fixation d'au moins un poils dans une ouverture associée (12) dans un support de poils (10) en matière plastique en tant que partie d'une brosse ultérieure présentant une face avant (18), ledit au moins poil présentant une extrémité de fixation épaissie (24), **caractérisé par** les étapes suivantes :
ledit au moins un poil est inséré dans l'ouverture (12) avec son extrémité de fixation épaissie (24) en avant depuis la face avant (18) jusqu'à ce que l'extrémité de fixation épaissie (24) soit entièrement logée dans l'ouverture (12) et espacée de la face avant (18),
une sonotrode (26) est placée sur la face avant (18) autour d'un bord d'ouverture (20) entourant l'ouverture (12) sur la face avant (18),
la sonotrode (26) est activée et génère, en raison de son énergie vibratoire et du contact avec le support de poils (10), un échauffement de la matière plastique dans le support de poils (10) au-dessous du bord d'ouverture (20), et
la sonotrode est pressée sur la face avant (18) contre le bord d'ouverture (20) et déforme le support de poils (10) chauffé au-dessous du bord d'ouverture (20) et réduit la section transversale de l'ouverture (12) dans la zone du bord d'ouverture (20) à une section transversale inférieure à l'extrémité de fixation épaissie (24) pour bloquer l'extrémité de fixation (24) de manière mécanique dans le support de poils (10).

2. Procédé selon la revendication 1, **caractérisé en ce qu'**une sonotrode (26) est utilisée, laquelle entoure entièrement ou partiellement l'ouverture (12).

3. Procédé selon la revendication 2, **caractérisé en ce que** la sonotrode (26) est fendue longitudinalement et est composée d'une pluralité de tronçons de sonotrode en forme de coque.

4. Procédé selon la revendication 3, **caractérisé en ce que** les tronçons de sonotrode forment ensemble une unité de retenue pour recevoir et retenir ledit au moins un poil entre eux.

5. Procédé selon l'une des revendications précédentes, **caractérisé en ce que** ledit au moins un poil est en matière plastique et **en ce que** l'extrémité de fixation épaissie (24) est réalisée par fusion d'une extrémité du poil.

6. Procédé selon la revendication 5, **caractérisé en ce que** la touffe de poils (14) présente une extrémité de fixation épaissie (24) commune qui est réalisée par fusion des extrémités de poils adjacentes de la touffe de poils (14) avant ou après l'insertion dans la sonotrode (26).

7. Procédé selon l'une des revendications précédentes, **caractérisé en ce que** la sonotrode (26) et le support de poils (10) réalisent un mouvement de positionnement l'une par rapport à l'autre par cycle de fixation.

8. Procédé selon l'une des revendications précédentes, **caractérisé en ce que** la sonotrode (26) présente un logement pour ledit au moins un poils et **en ce que** ledit au moins un poil est transporté vers le support de poils (10) et est poussé hors du logement dans l'ouverture (12) dans le support de poils (10).

9. Procédé selon l'une des revendications précédentes, **caractérisé en ce que** lors de l'insertion dudit au moins un poil dans l'ouverture (12), l'extrémité de fixation (24) et/ou le support de poils (10) ne sont pas chauffés/n'est pas chauffé(e) dans la zone du bord d'ouverture (20) et de l'ouverture (12).

10. Procédé selon l'une des revendications précédentes, **caractérisé en ce que** la sonotrode (26) reçoit une pluralité de touffes de poils (14) et les ancre simultanément dans des ouvertures associées (12) dans le même support de poils (10) par chauffage et formage de la matière plastique.

11. Procédé selon l'une des revendications précédentes, caractérisé en qu'uniquement une zone supérieure proche de la face avant (18) de la matière plastique délimitant l'ouverture (12) est formée.

12. Procédé selon l'une des revendications précédentes, **caractérisé en ce que** la matière plastique est formée et l'ouverture (12) est rétrécie de telle sorte que la matière plastique formée repose sur ledit au moins un, repose en particulier de préférence de manière étanche sur la périphérie extérieure d'une touffe de poils (14).

13. Dispositif pour la mise en oeuvre du procédé selon l'une des revendications précédentes, comprenant une attache (32) pour la réception de supports de poils (10) présentant au moins une ouverture (12), un outil d'amenée pour ledit au moins un poil inséré dans l'ouverture (12), et une sonotrode (26) qui reçoit au moins un poil et qui est guidée pour un mouvement en direction de la face avant (18) et en éloignement de celle-ci, la sonotrode (26) étant réalisée de manière à être apte à chauffer et à plastiquement former la matière plastique au-dessous du bord d'ouverture.

14. Dispositif selon la revendication 13, **caractérisé en ce que** la sonotrode (26) fait également partie de l'outil d'amenée et présente au moins un logement (28) pour au moins un poil, au moins un coulisseau (34) étant prévu, qui, après le transport vers le support de poils (10), pousse ledit au moins un poil hors d'un logement associé (28) et dans l'ouverture (12).

15. Dispositif selon la revendication 13 ou 14, **caractérisé en ce que** le logement (28) est adapté, en section transversale, à la forme de l'ouverture associée (12) et présente une section transversale inférieure à l'ouverture (12) à l'état non-déformé.
